# FASCICULE DE BREVET EUROPEEN

(11) **EP 3 898 281 B1**
(45) Date de publication et mention de la délivrance du brevet: **07.02.2024**
(21) Numéro de dépôt: 19842816.1
(22) Date de dépôt: 16.12.2019
(51) Int. Cl.: B60C 11/03, B60C 11/12, B60C 11/13

(54) **BANDE DE ROULEMENT AYANT DES CAVITES CACHEES PROLONGEES PAR DES OUVERTURES DECALEES**
LAUFFLÄCHE MIT DURCH VERSETZTE ÖFFNUNGEN ERWEITERTEN VERBORGENEN HOHLRÄUMEN
TREAD HAVING HIDDEN CAVITIES EXTENDED BY OFFSET OPENINGS

(30) Priorité: 17.12.2018 FR 1873050; 31.01.2019 FR 1900893
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: DOMPROBST, Frédéric, 63040 CLERMONT-FERRAND Cedex 9 (FR)
(74) Mandataire: M.F.P. Michelin
(86) Numéro de dépôt international: PCT/FR2019/053082
(87) Numéro de publication internationale: WO 2020/128271

(56) Documents cités:
- WO-A1-2013/083610
- WO-A1-2018/158546
- WO-A1-2020/204942
- JP-A- H05 155 202
- JP-A- 2008 168 872

## Description

### DOMAINE TECHNIQUE

L'invention concerne les bandes de roulement pour pneus de poids lourd et plus particulièrement les arrangements de creux dont sont pourvues ces bandes pour lesquelles les performances en roulage par temps de pluie sont rendues plus pérennes.

### DEFINITIONS

Par découpure, on entend toute cavité ou creux réalisé notamment par moulage dans une bande de roulement pour pneu, cette découpure s'étendant à la fois dans la profondeur de la bande de roulement et dans une direction principale - qui est la direction d'écoulement de l'eau dans la découpure lors d'un roulage par temps de pluie.

Par rainure ouverte, on entend une découpure ouverte sur une surface de roulement d'une bande de roulement venant en contact avec la chaussée, cette rainure étant délimitée par des parois en vis-à-vis, la distance moyenne entre ces parois étant appropriée pour que ces parois ne soient pas en contact l'une avec l'autre dans les conditions normales d'utilisation du pneu.

Par incision, on entend une découpure mince ayant une largeur moyenne petite, cette largeur moyenne correspondant à la distance moyenne séparant les parois en vis-à-vis la délimitant, et telle que, sous les conditions normales d'utilisation du pneu, ces parois puissent venir, au moins partiellement, en contact l'une sur l'autre lors du passage dans la région de contact avec la chaussée.

Par cavité cachée ou canal, on entend une cavité formé sous la surface de roulement à neuf de la bande de roulement, cette cavité étant destinée à former une nouvelle rainure ouverte sur la nouvelle surface de roulement générée après une usure partielle prédéterminée. Une cavité cachée est délimité par deux parois latérales en vis-à-vis, ces deux parois latérales étant reliées entre elles par une partie inférieure formant un fond et par une partie supérieure dans le prolongement de ces parois radialement vers l'extérieur. Dans cette partie supérieure, une incision peut s'ouvrir pour relier la cavité cachée à la surface de roulement à neuf. Vue en coupe, une cavité cachée peut prendre toute forme géométrique comme par exemple : circulaire, rectangulaire, triangulaire. On définit la direction principale d'un canal caché comme la direction selon laquelle s'écoule l'eau lors d'un roulage sur chaussée revêtue d'eau.

Par épaisseur de matière à user d'une bande de roulement, on entend l'épaisseur de matière de cette bande de roulement pouvant être usée en roulage avant d'atteindre une limite légale d'usage, cette limite pouvant être repérée par des dispositifs indicateurs de l'usure formés notamment dans les rainures. Lorsque cette limite est atteinte, une intervention est nécessaire afin soit de reformer un nouveau dessin de creux sur la bande de roulement du pneu soit de remettre une nouvelle bande de roulement voire de changer de pneu.

Dans la présente description, on utilise les termes radial ou radialement pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande.

Par ailleurs, on utilise le terme circonférentiel pour indiquer une direction qui, correspond à une direction tangente à tout cercle centré sur l'axe de rotation du pneu. Cette direction circonférentielle correspond à la direction longitudinale de la bande de roulement, cette dernière étant formée à la manière d'une bande plane avant son incorporation dans la fabrication d'un nouveau pneu ou son rechapage.

Le terme transversal fait référence à une direction qui est parallèle à la direction de l'axe de rotation du pneu. Cette direction est perpendiculaire à la direction radiale et à la direction circonférentielle. Une direction est dite oblique dès lors qu'elle forme un angle plus grand que zéro avec la direction circonférentielle ou longitudinale.

### TECHNIQUE ANTÉRIEURE

De façon connue, des conditions de roulage par temps de pluie requièrent une élimination la plus rapide possible de l'eau entre la bande de roulement de chaque pneu et la chaussée afin d'assurer le contact de la bande de roulement avec la chaussée. L'eau qui n'est pas repoussée sur l'avant ou sur les côtés du pneu s'écoule en partie dans des rainures formées dans la bande de roulement du pneu, ces rainures s'ouvrant à neuf sur la surface de roulement. Ces rainures peuvent être orientées dans la direction circonférentielle ou la direction transversale ou encore dans une direction oblique intermédiaire entre les deux précédentes directions voire dans une combinaison de ces directions.

Quelle que soit la catégorie de pneu, la bande de roulement de ce pneu doit offrir une performance en drainage de l'eau sur la route qui se situe toujours au-dessus d'une performance minimale dite performance de sécurité. En conséquence et compte tenu de l'usure progressive de la bande de roulement qui réduit progressivement les surfaces de sections transversales des rainures et en conséquence la capacité de ces rainures à évacuer une quantité donnée de liquide, il est usuel de réaliser des rainures débouchant sur la surface de roulement à l'état neuf et se prolongeant dans l'épaisseur de la bande jusqu'à au moins un niveau qui correspond à une limite légale d'usure nécessitant le retrait de la bande.

La réalisation d'une telle pluralité de rainures ouvertes sur la surface de roulement d'une bande de roulement a pour inconvénient de réduire la quantité de matière pour une largeur donnée de bande de roulement et par voie de conséquence de diminuer très sensiblement les rigidités de la bande de roulement ce qui a une incidence sur la performance en usure. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le coût de fabrication du pneu lui-même. Ces diminutions de rigidité peuvent en outre affecter la vitesse d'usure, la régularité de cette usure et certaines des performances attendues en roulage.

Par ailleurs, on constate une augmentation de la résistance au roulement qui est liée aux cycles de plus grande déformation des matériaux élastomériques formant la bande de roulement, ce qui se traduit par une augmentation sensible de la consommation en énergie des véhicules équipés de tels pneus.

Pour résoudre au moins en partie un tel problème, il a été proposé dans le document EP 2323858-B1 de former en totalité sous la surface de roulement de la bande de roulement à neuf des cavités cachées, chaque cavité cachée étant prolongée vers la surface de roulement de la bande de roulement à neuf par une incision de géométrie appropriée pour favoriser une plus grande rigidité. Avec ce type de pneu, il est possible de renouveler, selon le besoin, une partie plus ou moins importante du volume de drainage initial lorsque la bande a atteint un niveau d'usure prédéterminé.

De même, il a été proposé, dans la publication WO2016191443-A1 de prolonger les cavités cachées par des puits s'ouvrant à la fois dans une cavité cachée et jusqu'à la surface de roulement de la bande de roulement à neuf.

Il est connu de combiner la présence de rainures ouvertes sur la surface de roulement à neuf et la présence de cavités cachées formant des rainures additionnelles après une usure partielle de la bande de roulement. Ces rainures additionnelles compensent au moins partiellement la perte de volume des rainures initialement ouvertes sur la surface de roulement à neuf, perte liée à l'usure de la bande de roulement.

Bien que ces dispositions soient favorables d'un point de vue de l'équilibre des performances, il a été fait le constat que certaines performances en roulage nécessitaient encore d'être améliorées. C'est le cas en ce qui concerne la performance en motricité du pneu où il est requis d'avoir sur sa bande de roulement des arêtes de matière orientées de façon oblique ou transversale, ces arêtes étant actives dans le contact avec la chaussée lors du roulage.

Aux dispositions précédemment rappelées, il peut être ajouté la présence de rainures d'orientation oblique ou transversale ; toutefois, cet ajout s'il génère bien de nouvelles arêtes obliques ou transversales, a pour conséquence une diminution de la rigidité de la bande de roulement à neuf.

WO 2018/158546 A1 décrit une bande de roulement d'un pneumatique destiné à équiper une remorque de poids lourd, n'étant pas appropriée pour conférer une direction de rotation préférentielle.

WO 2020/204942 A1, publié après la date effective de la présente demande, décrit une bande de roulement comprenant de premières ouvertures d'extensions orientées, de telle sorte que la partie de chaque première ouverture la plus éloignée de l'incision entre en dernier, et non en premier, dans le contact avec la chaussée, selon le sens de rotation du pneumatique.

### RÉSUMÉ DE L'INVENTION

La présente invention est relative à une solution à ce problème d'augmentation de la longueur d'arêtes obliques ou transversales tout en conservant un bon niveau de rigidité globale d'une bande de roulement de pneu pourvu de cavités cachées.

À cet effet, l'invention a pour objet une bande de roulement pour pneu de véhicule poids lourd selon la revendication 1.

Grâce à cette disposition, il est possible de maintenir à un niveau relativement élevé la rigidité de la bande de roulement à l'état neuf tout en bénéficiant de la présence d'arêtes orientées transversalement ou obliquement (par rapport à la direction des canaux cachés orientés préférentiellement selon une direction longitudinale ou circonférentielle), ces dernières étant formées par les arêtes des ouvertures sur la surface de roulement des extensions prolongeant les canaux cachés. Chaque extension prolongeant un canal caché s'ouvre d'une part sur ou à proximité de la surface de roulement, selon une première ouverture, et d'autre part dans le canal caché, selon une deuxième ouverture, en constituant un canal secondaire, ayant une section significative. Autrement dit, une extension, au sens de l'invention, n'est pas une incision. Par conséquent, les parois d'une extension ne peuvent pas entrer en contact l'une avec l'autre, même partiellement, lors du passage de la bande de roulement dans la région de contact avec la chaussée, dans les conditions normales de roulage du pneu. Une telle extension reste donc nécessairement toujours ouverte, au cours du roulage du pneu, et permet la circulation de l'eau, en cas de besoin. En outre, chaque première ouverture d'une extension, s'ouvrant sur ou à proximité de la surface de roulement, a une forme allongée, caractérisée par une dimension maximale L0 et une dimension minimale I0 correspondant respectivement à la longueur et à la largeur du plus petit rectangle dans lequel est inscrite ladite première ouverture. Dans le domaine des pneus pour poids lourd, une première ouverture a typiquement une dimension minimale I0 au moins égale à 3 mm et une dimension maximale L0 au moins égale à 10 mm et au plus égale à 100 mm. L'orientation de la dimension maximale L0 est généralement transversale ou oblique, pour obtenir une longueur d'arête transversale ou oblique la plus grande possible, ce qui garantit une contribution optimale de la première ouverture à l'adhérence longitudinale. Enfin, la première ouverture d'une extension peut être transversalement positionnée soit en contact avec l'incision prolongeant le canal caché, soit à distance de ladite incision.

Selon un mode de réalisation, la première ouverture d'une extension peut s'ouvrir sur la surface de roulement à neuf permettant le drainage de l'eau dès le début de l'usage du pneu. Dans une autre variante, cette première ouverture peut être décalée d'une faible distance vers l'intérieur de la bande de roulement et n'apparaître sur la surface de roulement qu'après une usure partielle prédéterminée de la bande offrant ainsi la possibilité d'avoir une plus grande rigidité à neuf. Dans cette autre variante, chaque extension est généralement prolongée vers la surface de roulement par une incision de faible largeur, cette incision étant reliée à l'incision prolongeant le canal caché.

Selon une variante de l'invention, les premières ouvertures des extensions sont décalées transversalement par rapport à l'incision prolongeant le canal caché, une incision complémentaire de faible largeur reliant chaque extension à la surface de roulement, cette incision complémentaire étant en outre reliée à l'incision prolongeant le canal caché. Il est à noter que la première ouverture d'une extension a une plus petite dimension ou largeur significativement supérieure à la largeur de l'incision complémentaire.

Avantageusement, toutes les premières ouvertures des extensions d'un même canal caché sont formées d'un même côté par rapport à l'incision prolongeant ledit canal vers la surface de roulement.

Avantageusement, la seconde ouverture de chaque extension s'ouvre au moins en partie sur l'une des parois latérales délimitant un canal caché, ceci permettant de conserver la présence d'arêtes transversales ou obliques même après l'apparition de rainures additionnelles lors de l'ouverture des canaux cachés après usure.

Avantageusement, toutes les extensions d'un même canal caché ont leurs premières ouvertures localisées entre l'incision prolongeant un canal caché vers la surface de roulement et l'un des bords externes de la bande de roulement afin de permettre le drainage de ce bord.

Dans un mode de réalisation, les premières ouvertures des extensions d'un même canal caché sont formées sur un même côté par rapport à l'incision prolongeant le canal caché et de plus elles sont transversalement décalées les unes par rapport aux autres.

Dans un autre mode de réalisation, les premières ouvertures des extensions sont orientées pour faire un angle A compris entre 20 degrés et 70 degrés avec la direction principale du canal caché auquel ces extensions sont reliées.

Selon l'invention, la bande de roulement est appropriée pour conférer une direction de rotation préférentielle au pneu pourvu de cette bande. Cette direction préférentielle est en général matérialisée sur la bande de roulement ou sur le pneu par un élément visuel ou marquage comme par exemple une flèche. Selon l'invention, les premières ouvertures des extensions mettant en communication un canal caché avec l'extérieur sont avantageusement toutes orientées pour favoriser l'écoulement de l'eau présente sur une chaussée vers l'intérieur de la bande de roulement. Précisément, ces premières ouvertures sont orientées afin que la partie de chaque première ouverture la plus éloignée de l'incision prolongeant le canal caché entre en premier dans le contact avec la chaussée.

Avantageusement, les premières ouvertures des extensions ont des géométries allongées sur la surface de roulement, c'est-à-dire dont le ratio entre la dimension I0 et la dimension maximale L0 est compris entre 1/2 et 1/15. Pour des pneus de poids lourd usuels, la dimension maximale des premières ouvertures est au moins égale à 10 mm et au plus égale à 100 mm, et leur dimension minimale I0 est au moins égale à 3 mm

Ce qui a été énoncé pour des canaux cachés pourvus d'extensions s'ouvrant sur la surface de roulement peut s'appliquer soit au cas où ces extensions s'ouvrent à l'état neuf sur la surface de roulement soit au cas où ces extensions ne s'ouvrent qu'après une usure partielle.

Selon une variante de l'invention, la bande de roulement comprend au moins un canal caché ayant une pluralité d'extensions, ce canal caché s'étendant dans la direction longitudinale de la bande de roulement (cette direction correspond à la direction circonférentielle lorsque la bande de roulement équipe un pneu).

L'invention concerne également un pneu pour véhicule poids lourd, ce pneu étant équipé d'une bande de roulement telle que décrite précédemment.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES DESSINS

La figure 1 montre une première variante de disposition des ouvertures formées par les extensions s'ouvrant sur un canal caché longitudinal en totalité à l'intérieur d'une bande de roulement qui n'est pas selon l'invention;
La figure 2 montre en coupe transversale (B-B sur la figure 1) la première variante à l'état neuf ;
La figure 3 montre une deuxième variante de disposition des ouvertures formées par les extensions s'ouvrant sur un canal caché qui n'est pas selon l'invention;
La figure 4 montre une coupe transversale de la bande de roulement (C-C sur la figure 3) selon la deuxième variante ;
La figure 5 montre une variante selon l'invention de disposition des ouvertures formées par les extensions s'ouvrant sur un canal caché.

### DESCRIPTION DÉTAILLÉE

Pour faciliter la lecture des figures, des mêmes signes de référence sont employés pour la description de variantes de l'invention dès lors que ces signes font référence à des éléments de même nature que cette nature soit structurelle ou bien fonctionnelle.

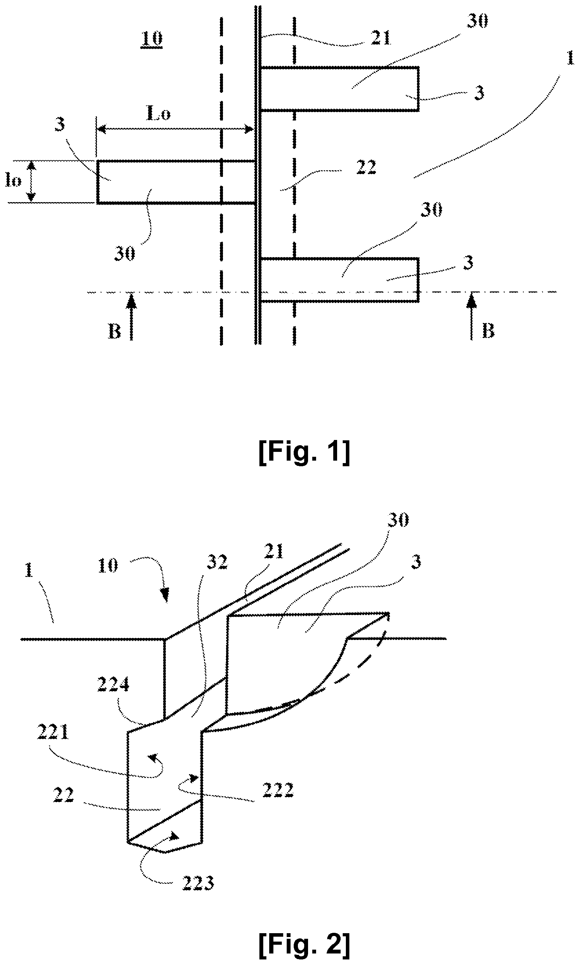

La figure 1 montre une première variante qui n'est pas selon l'invention. Sur cette première variante, une bande de roulement 1 pour pneu de poids lourd comprend une surface de roulement 10 et, ouvertes sur cette surface de roulement, des découpures dont au moins une incision 21 orientée longitudinalement (circonférentiellement sur le pneu pourvu de cette bande). Cette incision longitudinale 21 s'ouvre à son autre extrémité dans un canal caché 22 orienté longitudinalement. Ce canal caché 22 est entièrement formé à l'intérieur de la bande de roulement et est destiné à former, après une usure partielle prédéterminée, une nouvelle rainure ouverte sur la surface de roulement. Il est ainsi possible d'ajuster, en le limitant, le volume de creux de la bande de roulement à neuf afin de mieux gérer l'abaissement de rigidité lié à la présence de ces creux. L'incision longitudinale 21 a une largeur adaptée pour pouvoir se fermer lors du passage dans le contact avec une chaussée, c'est-à-dire que les parois délimitant ladite incision peuvent au moins en partie venir au contact l'une contre l'autre et ainsi isoler le canal 22 de l'extérieur.

Par ailleurs et comme on peut le voir avec la figure 2 montrant en coupe transversale cette première variante à l'état neuf, le canal caché 22 est délimité par des parois en vis-à-vis 221, 222, ces parois étant reliées à la fois dans leur partie inférieure formant le fond 223 du canal 22 et dans leur partie supérieure 224 (proche de la surface de roulement 10). C'est dans cette partie supérieure 224 du canal 22 que l'incision 21 s'ouvre.

Selon cette première variante, il est en outre formé une pluralité d'extensions 3 comportant une première ouverture 30 s'ouvrant sur la surface de roulement 10 à l'état neuf. Ces extensions 3 comportent une seconde ouverture 32 s'ouvrant dans l'incision 21 et dans la partie supérieure 224 du canal caché 22. Chaque extension 3 s'étend entièrement d'un même côté par rapport à l'incision 21 ; les extensions 3 sont disposées en alternance de chaque côté de l'incision 21. La première ouverture 30 de chaque extension 3 sur la surface de roulement à neuf a une géométrie rectangulaire de longueur Lo et de largeur Io, la longueur Lo étant orientée transversalement sur la bande de roulement. Ces largeurs Io et longueur Lo sont dans l'exemple décrit dans un ratio de 1 à 5.

Les extensions 3 permettent ainsi le drainage à neuf de la surface de roulement vers le canal caché 22 et leur décalage par rapport à l'incision longitudinale 21 surmontant le canal caché 22 génère des arêtes orientées transversalement favorable pour obtenir une performance en traction et en freinage. Par ailleurs, le contour de ces premières ouvertures 30 sur la surface de roulement évolue avec l'usure de la bande de roulement ce qui est favorable pour prévenir l'apparition d'usure irrégulière. Dans cette variante, la première ouverture 30 de chaque extension 3 a une surface qui se réduit progressivement avec l'usure.

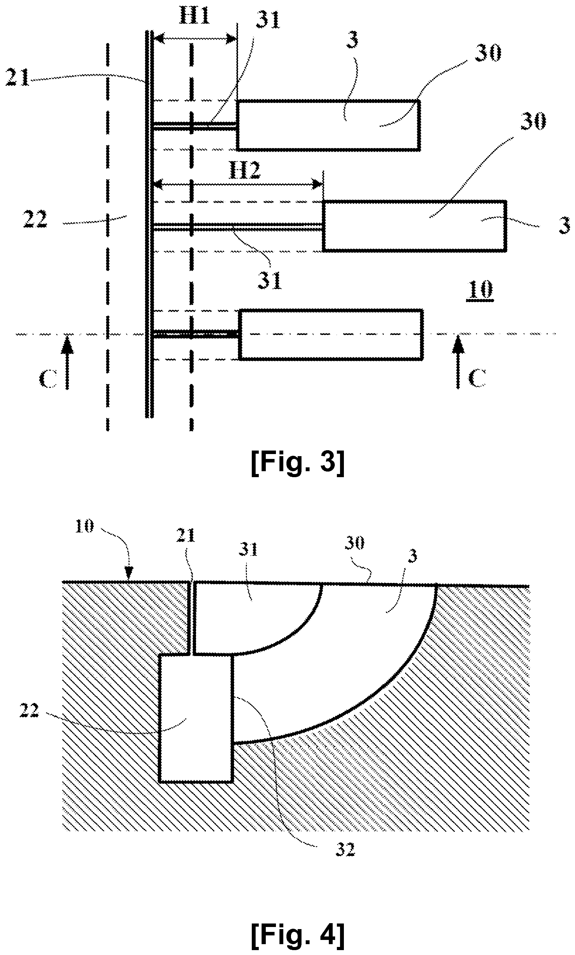

La figure 3 montre une deuxième variante qui n'est pas selon l'invention selon laquelle les premières ouvertures 30 des extensions 3 s'ouvrant sur un canal caché 22 sont toutes positionnées d'un même côté par rapport à l'incision 21 surmontant le canal caché 22. En outre, les premières ouvertures 30 sont positionnées à neuf et transversalement à des distances H1, H2 différentes par rapport à l'incision 21 surmontant le canal caché 22. En combinant cette disposition avec un pas longitudinal entre les extensions 3 (pas mesuré dans la direction principale du canal caché) il est possible d'accroître l'efficacité du drainage entre la bande de roulement et la chaussée. Le côté sur lequel sont positionnées les premières ouvertures 30 peut être préférentiellement choisi comme le côté le plus proche de l'un des bords latéraux de la bande de roulement.

La figure 4 montre une coupe transversale de la bande de roulement de cette deuxième variante. Sur cette figure 4 on constate que l'extension 3 comprend une seconde ouverture 32 s'ouvrant dans l'une des parois latérales délimitant le canal caché 22. Grâce à cette disposition, il est possible de maintenir une longueur d'arêtes transversales même après que le canal caché soit devenu une rainure additionnelle.

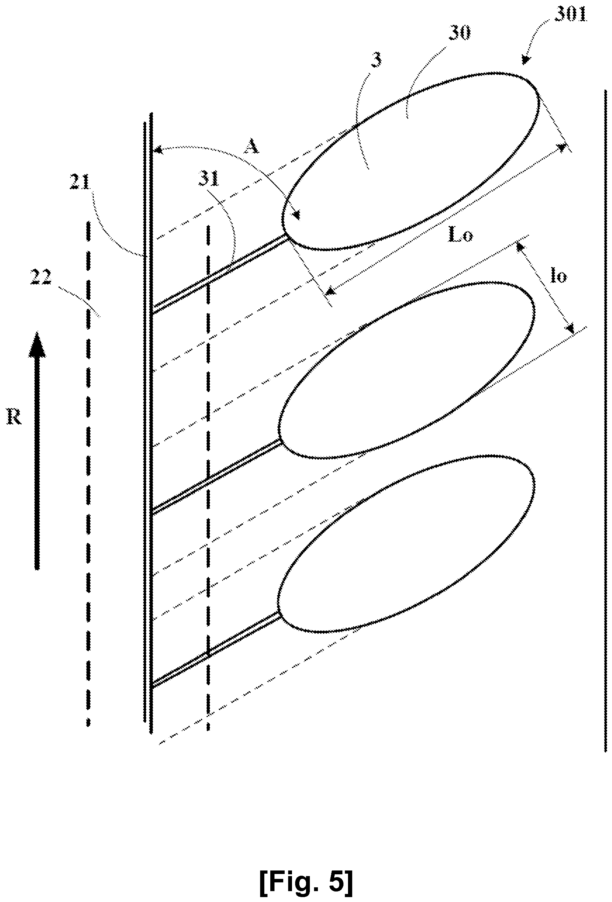

La figure 5 montre une variante selon l'invention de disposition des premières ouvertures 30 des extensions 3 s'ouvrant dans un canal caché 22 orienté longitudinalement dans une bande de roulement. Dans cette troisième variante, la bande de roulement est conçue pour imposer une direction de rotation au pneu (repérée sur la figure par une flèche R). Cette direction préférentielle de rotation est en règle générale repérée sur le pneu par un signe spécifique visible. Dans pareil cas, il est avantageux d'orienter les premières ouvertures 30 des extensions 3 de manière à utiliser au mieux ce sens de rotation préférentiel. Le cas décrit montre des premières ouvertures 30 de forme oblongue dont la plus grande des dimensions notée Lo fait un angle A avec la direction longitudinale suivie par le canal caché 22 et l'incision 21 la prolongeant jusqu'à la surface de roulement. Les incisions additionnelles 31 formées entre l'incision longitudinale 21 et chaque extension 3 sont orientées avec le même angle A.

En outre, cet angle A est tel que lors d'un roulage, c'est la partie 301 de la première ouverture 30 de chaque extension 3 la plus éloignée de l'incision longitudinale 21 qui entre la première dans le contact avec la chaussée. Cette disposition améliore encore le drainage entre la chaussée et l'intérieur du canal caché.

Bien entendu, les différentes variantes décrites peuvent être combinées entre elles, sans sortir du cadre défini par les revendications. Par ailleurs, les exemples décrits peuvent être transposés au cas où les ouvertures des extensions n'apparaissent sur la surface de roulement qu'après une usure partielle limitée.

L'invention n'est pas limitée aux exemples présentés et diverses modifications peuvent y être apportées sans sortir de son cadre tel que défini par les revendications. Notamment, ce qui a été décrit avec des cavités cachées d'orientation principale longitudinale (circonférentielle sur le pneu) pourrait s'appliquer à toute autre orientation et notamment transversale ou oblique. De même, il est possible de combiner des canaux cachés orientés circonférentiellement et des canaux cachés orientés transversalement, ces deux types de canaux comportant chacun une pluralité d'extensions mettant en communication ces canaux avec l'extérieur à neuf ou après usure partielle.

## Revendications

1. [Bande de roulement (1) pour pneu de véhicule poids lourd ayant une surface de roulement (10) à neuf destinée à venir en contact avec une chaussée lors du roulage d'un pneu pourvu de cette bande de roulement, cette bande de roulement (1) comprenant :
- au moins une cavité formant un canal caché (22) destiné à former une rainure additionnelle après une usure partielle prédéterminée, ce canal caché (22) étant délimité par deux parois latérales (221, 222) en vis-à-vis, ces deux parois latérales étant reliées entre elles par une partie inférieure formant un fond (223) et par une partie supérieure (224),
- chaque canal caché (22) étant prolongé vers la surface de roulement (10) à neuf et sur toute sa longueur par une incision (21) de faible largeur s'ouvrant dans la partie supérieure (224) dudit canal,
- au moins un canal caché (22) ayant une pluralité d'extensions (3) s'étendant à partir de ce canal caché en allant vers la surface de roulement pour mettre en communication le canal caché (22) et l'extérieur de la bande de roulement au moins à partir d'une usure partielle de la bande,
- chaque extension (3) étant un canal secondaire ayant deux ouvertures, une première ouverture (30) sur ou proche de la surface de roulement (10) de forme allongée de dimension minimale I0 et de dimension maximale L0 et une seconde ouverture (32) s'ouvrant dans le canal caché (22)
- cette bande de roulement étant **caractérisée en ce qu'**elle est appropriée pour conférer une direction de rotation préférentielle au pneu pourvu de cette bande, **en ce que,** pour au moins un canal caché (22) pourvu d'extensions (3), chaque première ouverture (30) de ces extensions (3) est entièrement formée d'un côté de l'incision (21) prolongeant ledit canal caché (22) **et en ce que** les premières ouvertures (30) des extensions (3) mettant en communication un canal caché (22) avec l'extérieur sont toutes orientées afin que la partie (301) de chaque première ouverture (30) la plus éloignée de l'incision (21) prolongeant le canal caché entre en premier dans le contact avec la chaussée.

2. Bande de roulement (1) selon la revendication 1 **dans laquelle** toutes les premières ouvertures (30) des extensions (3) d'un même canal caché (22) sont formées d'un même côté par rapport à l'incision (21) prolongeant ledit canal vers la surface de roulement (10).

3. Bande de roulement (1) selon la revendication 1 ou la revendication 2 **dans laquelle** les premières ouvertures (30) sont décalées transversalement par rapport à l'incision (21) prolongeant le canal caché (22), une incision complémentaire (31) de faible largeur reliant chaque extension (3) à la surface de roulement, cette incision complémentaire (31) étant en outre reliée à l'incision (21) prolongeant le canal caché (22).

4. Bande de roulement (1) selon l'une quelconque des revendications 1 à 3 **dans laquelle** la seconde ouverture (32) de chaque extension (3) s'ouvre au moins en partie sur l'une des parois latérales (221, 222) délimitant un canal caché (22).

5. Bande de roulement (1) selon la revendication 3 ou la revendication 4 **dans laquelle** les premières ouvertures (30) des extensions (3) d'un même canal caché (22) sont formées sur un même côté par rapport à l'incision (21) prolongeant le canal caché et de plus elles sont transversalement décalées les unes par rapport aux autres.

6. Bande de roulement (1) selon l'une quelconque des revendications 1 à 5 **dans laquelle** les premières ouvertures (30) des extensions (3) sont orientées pour faire un angle A compris entre 20 degrés et 70 degrés avec la direction principale du canal caché (22) sur lequel ces extensions (3) sont reliées.

7. Bande de roulement (1) selon l'une quelconque des revendications 1 à 6 **dans laquelle** les premières ouvertures (30) des extensions (3) ont des géométries allongées sur la surface de roulement, c'est-à-dire dont le ratio entre la dimension minimale I0 et la dimension maximale L0 est compris entre 1/2 et 1/15.

8. Bande de roulement (1) selon l'une quelconque des revendications 1 à 7 **dans laquelle** les premières ouvertures (30) des extensions (3) ne s'ouvrent sur la surface de roulement de la bande qu'après une usure partielle de cette bande.

9. Bande de roulement (1) selon l'une quelconque des revendications 1 à 8 **dans laquelle** au moins un canal caché (22) ayant une pluralité d'extensions (3) s'étend dans la direction longitudinale de la bande de roulement.

10. Pneu pour véhicule poids lourd pourvu d'une bande de roulement selon l'une quelconque des revendications 1 à 9. 1

## Patentansprüche

1. Laufstreifen (1) für einen Lkw-Reifen mit einer Lauffläche (10) im Neuzustand, die dazu bestimmt ist, beim Rollen eines mit diesem Laufstreifen versehenen Reifens mit einer Fahrbahn in Kontakt zu gelangen, wobei dieser Laufstreifen (1) umfasst:
- mindestens einen Hohlraum, der einen verborgenen Kanal (22) bildet, der dazu bestimmt ist, nach einem vorbestimmten teilweisen Verschleiß eine zusätzliche Rille zu bilden, wobei dieser verborgene Kanal (22) durch zwei einander gegenüberliegende Seitenwände (221,222) begrenzt wird, wobei diese beiden Seitenwände untereinander durch einen unteren Teil, der einen Boden (223) bildet, und durch einen oberen Teil (224) verbunden sind,
- wobei jeder verborgene Kanal (22) zu der Lauffläche (10) hin im Neuzustand und über seine gesamte Länge durch eine Lamelle (21) von geringer Breite verlängert wird, die sich in dem oberen Teil (224) des Kanals öffnet;
- wobei mindestens ein verborgener Kanal (22) eine Mehrzahl von Erweiterungen (3) hat, die sich von diesem verborgenen Kanal aus zu der Lauffläche hin erstrecken, um den verborgenen Kanal (22) und die Außenseite des Laufstreifens zumindest ab einem teilweisen Verschleiß des Streifens in Verbindung zu bringen,
- wobei jede Erweiterung (3) ein Nebenkanal mit zwei Öffnungen ist, einer ersten Öffnung (30) auf oder nahe der Lauffläche (10) von länglicher Form mit dem kleinsten Maß 10 und dem größten Maß
dem mit diesem Streifen versehenen Reifen eine bevorzugte Drehrichtung zu verleihen, dass bei mindestens einem mit Erweiterungen (3) versehenen verborgenen Kanal (22) jede erste Öffnung (30) dieser Erweiterungen (3) vollständig auf einer Seite der den verborgenen Kanal (22) verlängernden Lamelle (21) gebildet ist und dass die ersten Öffnungen (30) der Erweiterungen (3), die einen verborgenen Kanal (22) mit der Außenseite in Verbindung bringen, alle ausgerichtet sind, damit der Teil (301) jeder ersten Öffnung (30), der am weitesten von der den verborgenen Kanal verlängernden Lamelle (21) entfernt ist, als Erster in Kontakt mit der Fahrbahn gelangt.

2. Laufstreifen (1) nach Anspruch 1, bei dem alle ersten Öffnungen (30) der Erweiterungen (3) eines selben verborgenen Kanals (22) auf einer selben Seite in Bezug auf die den Kanal zu der Lauffläche (10) hin verlängernde Lamelle (21) gebildet sind.

3. Laufstreifen (1) nach Anspruch 1 oder Anspruch 2, bei dem die ersten Öffnungen (30) in Bezug auf die den verborgenen Kanal (22) verlängernde Lamelle (21) quer versetzt sind, wobei eine ergänzende Lamelle (21) von geringer Breite jede Erweiterung (3) mit der Lauffläche verbindet, wobei diese ergänzende Lamelle (31) ferner mit der den verborgenen Kanal (22) verlängernden Lamelle (21) verbunden ist.

4. Laufstreifen (1) nach einem der Ansprüche 1 bis 3, bei dem sich die zweite Öffnung (32) jeder Erweiterung (3) mindestens zum Teil an einer der einen verborgenen Kanal (22) begrenzenden Seitenwände (221, 222) öffnet.

5. Laufstreifen (1) nach Anspruch 3 oder Anspruch 4, bei dem die ersten Öffnungen (30) der Erweiterungen (3) eines selben verborgenen Kanals (22) auf einer selben Seite in Bezug auf die den verborgenen Kanal verlängernde Lamelle (21) gebildet sind und darüber hinaus zueinander quer versetzt sind.

6. Laufstreifen (1) nach einem der Ansprüche 1 bis 5, bei dem die ersten Öffnungen (30) der Erweiterungen (3) ausgerichtet sind, um einen Winkel A zwischen 20 Grad und 70 Grad mit der Hauptrichtung des verbogenen Kanals (22) zu bilden, mit dem diese Erweiterungen (3) verbunden sind.

7. Laufstreifen (1) nach einem der Ansprüche 1 bis 6, bei dem die ersten Öffnungen (30) der Erweiterungen (3) Geometrien auf der Lauffläche haben, die länglich sind, das heißt, deren Verhältnis zwischen dem kleinsten Maß 10 und dem größten Maß L0 zwischen 1/2 und 1/15 beträgt.

8. Laufstreifen (1) nach einem der Ansprüche 1 bis 7, bei dem sich die ersten Öffnungen (30) der Erweiterungen (3) auf der Lauffläche des Streifens erst nach einem teilweisen Verschleiß dieses Streifens öffnen.

9. Laufstreifen (1) nach einem der Ansprüche 1 bis 8, bei dem sich mindestens ein verborgener Kanal (22), der eine Mehrzahl von Erweiterungen (3) hat, in der Längsrichtung des Laufstreifens erstreckt.

10. Lkw-Reifen, der mit einem Laufstreifen nach einem der Ansprüche 1 bis 9 versehen ist.

## Claims

1. Tread (1) for a heavy-duty vehicle tyre, having a tread surface (10) in the new state that is intended to come into contact with a road surface when a tyre provided with this tread is running, this tread (1) comprising:
- at least one cavity forming a hidden channel (22) intended to form an additional groove after a predetermined amount of partial wear, this hidden channel (22) being delimited by two facing lateral walls (221, 222), these two lateral walls being connected together by a lower part forming a bottom (223) and by an upper part (224),
- each hidden channel (22) being extended towards the tread surface (10) in the new state and along its entire length by a sipe (21) of small width that opens into the upper part (224) of said channel,
- at least one hidden channel (22) having a plurality of extensions (3) that extend from this hidden channel towards the tread surface so as to place the hidden channel (22) and the outside of the tread into communication at least starting from an amount of partial wear of the tread,
- each extension (3) being a secondary channel having two openings, a first opening (30) at or close to the tread surface (10) of elongate shape with a minimum dimension I0 and a maximum dimension Lo, and a second opening (32) that opens into the hidden channel (22),
- this tread, being appropriate for conferring a preferred direction of rotation on the tyre provided with this tread, being **characterized in that,** for at least one hidden channel (22) provided with extensions (3), each first opening (30) of these extensions (3) is formed entirely by a side of the sipe (21) that extends said hidden channel (22) **and in that** the first openings (30) of the extensions (3) that place a hidden channel (22) into communication with the outside are all oriented such that the part (301) of each first opening (30) that is furthest away from the sipe (21) that extends the hidden channel is the first to come into contact with the road surface.

2. Tread (1) according to Claim 1, **wherein** all the first openings (30) of the extensions (3) of one and the same hidden channel (22) are formed on one and the same side with respect to the sipe (21) that extends said channel towards the tread surface (10).

3. Tread (1) according to Claim 1 or Claim 2, **wherein** the first openings (30) are offset transversely with respect to the sipe (21) that extends the hidden channel (22), a complementary sipe (31) of small width connecting each extension (3) to the tread surface, this complementary sipe (31) also being connected to the sipe (21) that extends the hidden channel (22).

4. Tread (1) according to any one of Claims 1 to 3, **wherein** the second opening (32) of each extension (3) opens at least partially onto one of the lateral walls (221, 222) delimiting a hidden channel (22).

5. Tread (1) according to Claim 3 or Claim 4, **wherein** the first openings (30) of the extensions (3) of one and the same hidden channel (22) are formed on one and the same side with respect to the sipe (21) that extends the hidden channel and they are also offset transversely with respect to one another.

6. Tread (1) according to any one of Claims 1 to 5, **wherein** the first openings (30) of the extensions (3) are oriented so as to make an angle A of between 20 degrees and 70 degrees with the main direction of the hidden channel (22) to which these extensions (3) are connected.

7. Tread (1) according to any one of Claims 1 to 6, **wherein** the first openings (30) of the extensions (3) have elongate geometries at the tread surface, meaning that the ratio between the minimum dimension I0 and the maximum dimension L0 thereof is between 1/2 and 1/15.

8. Tread (1) according to any one of Claims 1 to 7, **wherein** the first openings (30) of the extensions (3) only open onto the tread surface of the tread after this tread has become partially worn.

9. Tread (1) according to any one of Claims 1 to 8, **wherein** at least one hidden channel (22) having a plurality of extensions (3) extends in the longitudinal direction of the tread.

10. Tyre for a heavy-duty vehicle provided with a tread according to any one of Claims 1 to 9.
